# EUROPEAN PATENT APPLICATION

(11) **EP 2 581 244 A1**
(43) Date of publication of application: **17.04.2013**
(21) Application number: 11792259.1
(22) Date of filing: 19.05.2011
(51) Int. Cl.: B60J 3/00, B60J 1/20, E06B 9/42

(54) **SHADE DEVICE**

(30) Priority: 09.06.2010 JP 2010132106
(71) Applicant: Ashimori Industry Co., Ltd., Osaka-shi Osaka 550-0014 (JP)
(72) Inventor: KATADA, Naochika, Settsu-shi, Osaka 566-0001 (JP)
(74) Representative: Kilian Kilian & Partner
(86) International application number: PCT/JP2011/061528
(87) International publication number: WO 2011/155301

(57) **Abstract**

A shade device is configured to shield a window through a slit formed in a window peripheral member. The shade device includes: a windup device including a windup shaft supported so as to pivot about an axis; a shade that includes a short side edge and a long side edge opposed to each other and is configured to be drawn from and housed in the windup device through the slit, the long side edge being attached to the windup shaft; a stay attached to the short side edge of the shade; a cover body movable between a closed position for partially covering the slit and an open position for opening the slit; and an association mechanism that is configured so as to move the cover body between the open position and the closed position in an association manner with the pivot of the windup shaft, and moves the cover body to the closed position so as to cover the slit with the stay and the cover body in a housed state of the shade.

## Description

### Technical Field

The present invention relates to the technology of shielding a window with a shade.

### Background Art

A shade device is housed inside a peripheral member (for example, interior material of a motor vehicle) of a window in some cases and, in such cases, a slit is formed in the peripheral member so that a shade is drawn through this slit.

Patent Document 1 discloses a window roll-up blind that is applied to a rear window of a motor vehicle in the above-mentioned manner. That is, in the window roll-up blind of Patent Document 1, a winding shaft to which a first edge of a roll-up blind sheet is fixed is provided underneath a rear shelf, and the roll-up blind sheet is drawn through an outlet slot formed in the rear shelf, so that the rear window is shielded. In this case, the configuration is made such that a pull rod to which a second edge of the roll-up blind sheet is fixed is operated by a pair of levers for allowing the roll-up blind sheet to be drawn/housed.

### Prior Art Document

### Patent Document

Patent Document 1: Japanese Patent Application Laid-Open No. 2001-301458

### Summary of the Invention

### Problem to be Solved by the Invention

In a case of applying a shade device (window roll-up blind) to a window (such as a rear window a motor vehicle) having, for example, a trapezoidal shape in which the lengths of opposed sides differ from each other as shown in FIG. 1 of Patent Document 1, the shade (roll-up blind sheet) per se is generally formed into a shape corresponding to the shape of the window. When a shade having a short side edge and a long side edge is used, a stay for drawing the shade is attached to the short side edge thereof at times.

In a case where a shade device is installed in such a manner that a shade is drawn/housed through a slit (outlet slot) as in Patent Document 1, it is required to form the slit larger than the long side edge of the shade. In this case, the longitudinal dimension of the slit is larger than the longitudinal dimension of the stay attached to the short side edge of the shade. This results in the state in which the slit is opened for an amount longer than the stay in the housed state of the shade.

Therefore, an object of the present invention is to entirely cover a slit in the housed state of a shade.

### Means to Solve the Problem

A first aspect relates to a shade device configured to shield a window through a slit formed in a window peripheral member, which includes: a windup device including a windup shaft supported so as to pivot about an axis; a shade that includes a short side edge and a long side edge opposed to each other and is configured to be drawn from and housed in the windup device through the slit, the long side edge being attached to the windup shaft; a stay mounted to the short side edge of the shade; a cover body movable between a closed position for partially covering the slit and an open position for opening the slit; and an association mechanism that is configured so as to move the cover body between the open position and the closed position in an association manner with the pivot of the windup shaft, and moves the cover body to the closed position so as to cover the slit with the stay and the cover body in a housed state of the shade.

According to a second aspect, in the shade device of the first aspect, the association mechanism is configured so as to move the cover body along an axial direction of the windup shaft.

According to a third aspect, in the shade device of the first or second aspect: the association mechanism includes a guide body rotatable around an axis, in which a guiding recess is formed, and transmission means transmitting a rotational force of the windup shaft as a rotational force around the axis of the guide body; the cover body includes a projection configured to be disposed in the guiding recess of the guide body; and the guiding recess is formed so as to guide the projection along the axial direction of the guide body by the rotation of the guide body in a state in which the projection of the cover body is disposed inside thereof.

According to a fourth aspect, in the shade device of the third aspect, the transmission means includes: a windup-shaft-side gear coaxially connected to the windup shaft so as not to rotate relative thereto; an intermediate gear configured to rotate by meshing with the windup-shafi-side gear; and an association gear coaxially connected to the guide body so as not to rotate relative thereto and configured to rotate by meshing with the intermediate gear.

According to a fifth aspect, in the shade device of the third or fourth aspect, the guide body is a screw gear.

According to a sixth aspect, in the shade device of any one of the first to fifth aspects, the windup device includes a cover body guiding part guiding the cover body along the axial direction of the windup shaft.

According to a seventh aspect, in the shade device of any one of the first to sixth aspects, the stay includes an auxiliary cover part extending toward a side in a longitudinal direction, at a position offset from the cover body in a drawing/housing direction of the shade in the housed state of the shade.

### Effects of the Invention

According to the shade device of the first aspect, the cover body movable between the closed position for partially covering the slit and the open position for opening the slit is moved between the open position and the closed position by the association mechanism in an association manner with the pivot of the windup shaft, The association mechanism is configured to move the cover body to the closed position such that the stay and the cover body cover the slit in the housed state of the shade. This enables to entirely cover the slit in the housed state of the shade.

According to the shade device of the second aspect, the configuration is made such that the association mechanism causes the cover body to move along the axial direction of the windup shaft. Therefore, the shade device is also applicable to the case in which the space is difficult to be secured in the direction orthogonal to the axial direction of the windup shaft.

According to the shade device of the third aspect, when the rotational force around the axis of the windup shaft is transmitted by the transmission means and the guide body is rotated about the axis, the projection moves in the guiding recess of the guide body, so that the cover body is moved relative to the guide body in the axial direction thereof. Therefore, through setting of the path of the guiding recess in accordance with the shape, drawing dimension and the like of the shade, it is possible to move the cover body to be opened or closed as desired in an association manner with the pivot of the windup shaft associated with the operation of drawing/housing the shade.

According to the shade device of the fourth aspect, the windup-shaft-side gear rotating together with the windup shaft and the association gear rotating together with the guide body pivot via the intermediate gear, which enables to easily change the setting of, for example, the moving amount of the cover body.

According to the shade device of the fifth aspect, the guide body is a screw gear, and thus, the cover body can be moved with a constant moving amount with respect to the rotation amount of the windup shaft.

According to the shade device of the sixth aspect, the cover body guiding part is provided in the windup device, which enables to stabilize the operation of the cover body.

According to the shade device of the seventh aspect, the auxiliary cover part is provided in the stay, and thus, the slit can be covered entirely with the stay and the cover body with more reliability.

### Brief Description of Drawings

FIG. 1 is a schematic view of a shade device in a drawn state of a shade.
FIG. 2 is a schematic view of the shade device in a housed state of the shade.
FIG. 3 is a perspective view showing a state of a slit in the drawn state of the shade.
FIG. 4 is an enlarged view showing the relationship between the slit in FIG. 3 and a cover body.
FIG. 5 is a perspective view showing a state of the slit in the housed state of the shade.
FIG. 6 is an enlarged view showing the relationship between the slit in FIG. 5 and the cover body.
FIG. 7 is a perspective view of an association mechanism in the housed state of the shade.
FIG. 8 is a perspective view of the association mechanism in the drawn state of the shade.
FIG. 9 is a view showing the relationship between a guiding recess of a guide body and projections of the cover body.
FIG. 10 is a schematic view of a shade device according to a modification in a drawn state of a shade.
FIG. 11 is a schematic view of the shade device according to the modification in a housed state of the shade.

### Embodiment for Carrying Out the Invention

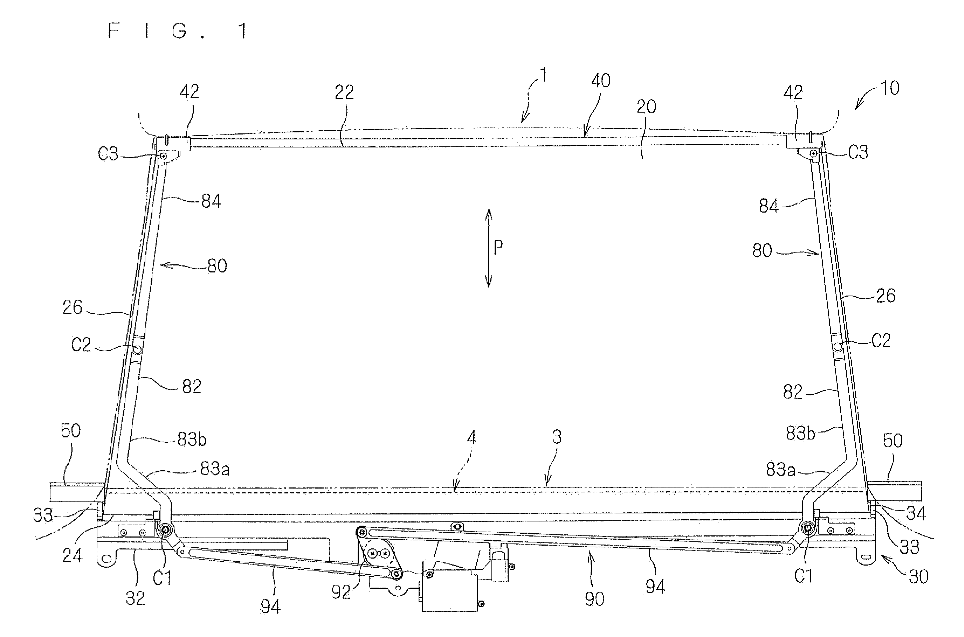

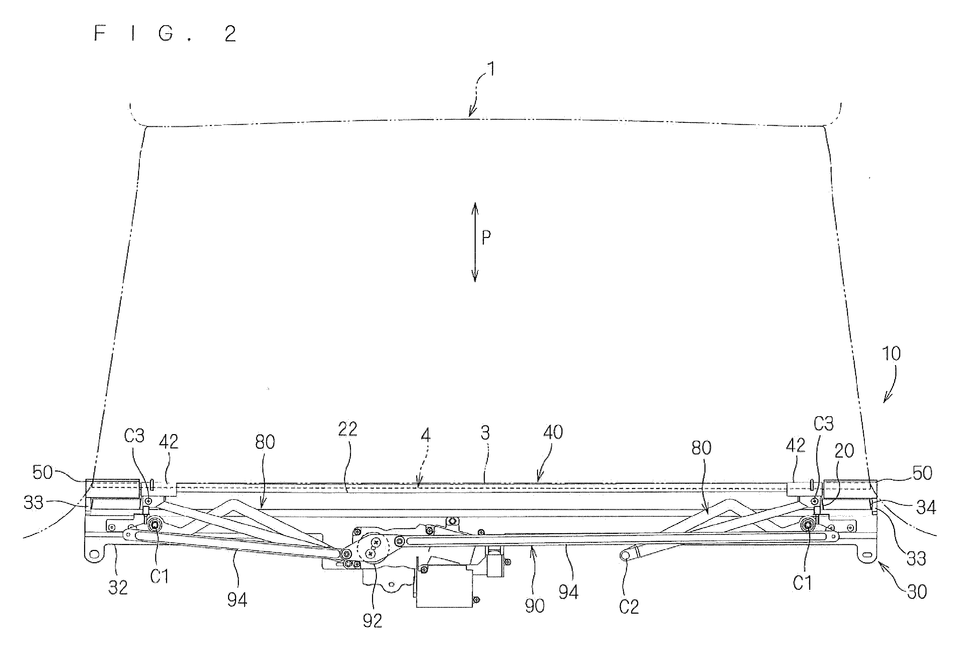

Hereinafter, a shade device 10 according to an embodiment is described (see FIGS. 1 and 2).

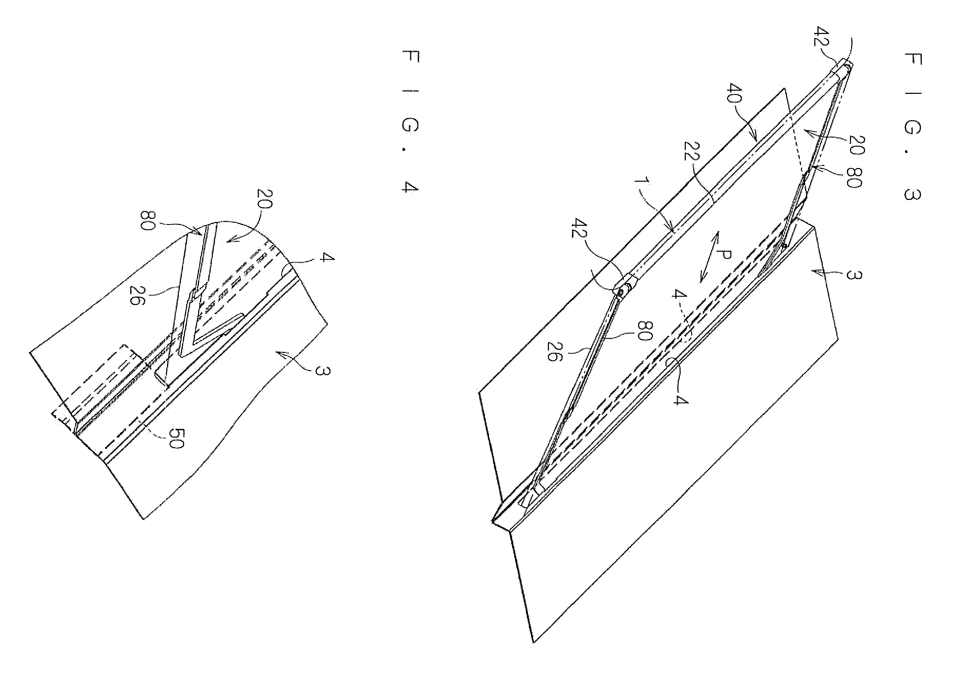

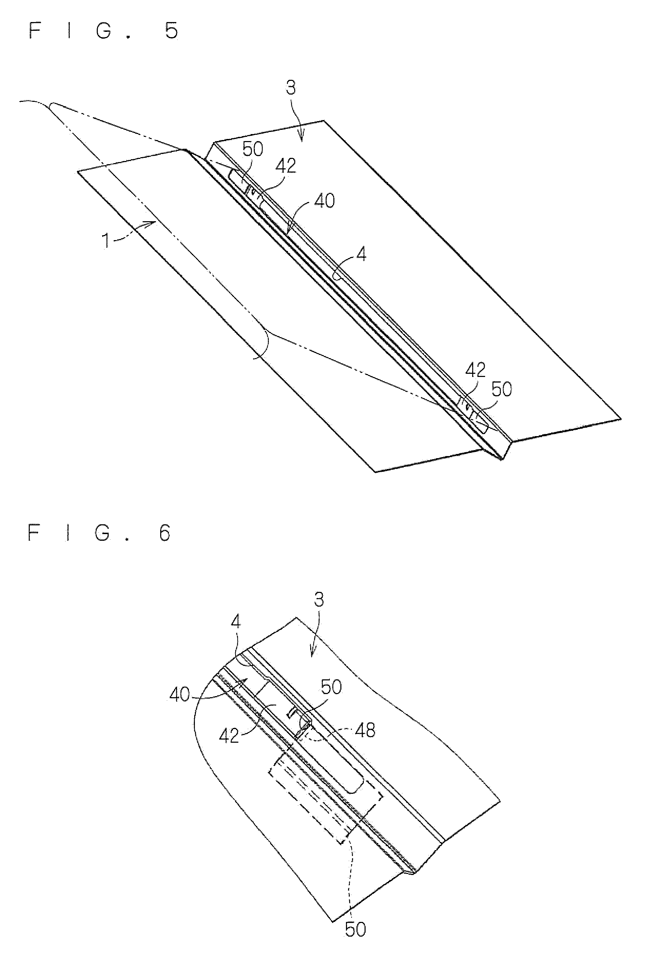

The shade device 10 serves to shield a window 1. The shade device 10 is disposed inside a window peripheral member 3 in which a slit 4 is formed, and draws/houses a shade 20 through the slit 4 (see FIG. 3). The shade device 10 is configured so as to entirely cover the slit 4 in the housed state of the shade 20 (see FIG. 5).

The window 1 to which the shade device 10 is applied is described for the sake of description.

Description is now given of an example in which the shade device 10 is applied to the window 1 being a rear window of a motor vehicle. The window 1 is formed into an approximately isosceles trapezoidal shape having a short side and a long side opposed to each other.

The shade device 10 is disposed inside a rear package tray (in a case of hatch back type, interior material such as a trim) as the window peripheral member 3 located on the long-length side (flour side of a motor vehicle) of the window 1. The slit 4 for drawing the shade 20, which is open toward a vehicle interior, is formed in the window peripheral member 3. The slit 4 is formed into a narrow through-hole shape extending approximately linearly along a width direction of a vehicle body. Hereinafter, as to the slit 4, the width direction of the vehicle body is referred to as a longitudinal direction of the slit 4, while a direction (direction in which the slit 4 is smaller in dimension) orthogonal to the longitudinal direction is referred to as a width direction, for the sake of description. More specifically, the slit 4 is set to have a dimension approximately identical to that of the long side of the window 1 (in relation to the shade 20 described below, dimension larger than that of a long side edge 24 thereof) in the longitudinal direction. The slit 4 has a width dimension set to be large enough to dispose a stay 40 described below inside thereof.

Needless to say, the shade device 10 is also applicable to other windows such as a side window of a motor vehicle, not only limited to the rear window of a motor vehicle as described above. It suffices that in the case of the application to those windows, the shade device 10 is disposed inside a trim as a window peripheral member, other interior member, and the like, and slits are formed in those parts.

The shade device 10 includes the shade 20, a windup device 30, the stay 40, cover bodies 50, and association mechanisms 60.

The shade 20 is formed by, for example, cutting and sewing a mesh-like fabric material, resin sheet, or the like into the shape and size suitable for shielding the window 1. More specifically, the shade 20 is formed into a shape (in this case, approximately isosceles trapezoidal shape) having a short side edge 22 and the long side edge 24 opposed to each other. Edges on both sides that connect the short side edge 22 and the long side edge 24 of the shade 20 are referred to as side edges 26 (see FIGS. 1 and 2).

Needless to say, the shade 20 may have, for example, a trapezoidal shape other than an isosceles trapezoidal shape or a shape having curved side edges as long as the shade 20 has the short side edge 22 and the long side edge 24 and is capable of shielding the window 1.

The shade 20 is attached to the windup device 30 so as to be drawn therefrom and housed therein. The windup device 30 includes a base 32, a pivot supporting part 33, a windup shaft 34, and the like.

The base 32 is a member formed by, for example, cutting and bending a metal plate or a member formed by extrusion molding of metal.

The windup shaft 34 is a long cylindrical member and is pivotally supported around an axis by the pivot supporting part 33, on the base 32. The long side edge 24 of the shade 20 is attached to the outer peripheral surface of the windup shaft 34 along the axial direction thereof. Accordingly, when the windup shaft 34 pivots, the shade 20 is wound up by the windup shaft 34.

The windup shaft 34 is pivotally biased by a biasing member (such as a coil spring; not shown) toward the direction (windup direction R) for winding up the shade 20 with respect to the pivot supporting part 33.

The windup device 30 is disposed inside the window peripheral member 3 located on the long-length side of the window 1. The windup device 30 is disposed at the position at which the shade 20 wound up by the windup shaft 34 can be drawn toward the vehicle interior through the slit 4. The windup device 30 is supported at the above-mentioned position as a result of the base 32 being fixed to a vehicle body, a panel of a door, or the like by, for example, screwing.

The stay 40 for drawing the shade 20 is attached to the short side edge 22 of the shade 20 (see FIGS. 1 and 2). The stay 40 is a long rod-like member extending over an entire length of the short side edge 22 of the shade 20. In this case, the stay 40 is formed into a size approximately identical to that of the short side edge 22 of the shade 20.

In a state in which the stay 40 is not drawn, the shade 20 is maintained in the housed state of being wound around the windup shaft 34 by the windup force of the windup device 30 (see FIGS. 2 and 5). In this state, the stay 40 is disposed in the slit 4 (position surrounded by an opening edge of the slit 4) so as to partially cover the slit 4 in the longitudinal direction.

Here, the state in which the stay 40 covers the slit 4 is not limited to the state in which the slit 4 is entirely covered in the width direction thereof, which is only required to cover the slit 4 to an extent that the structure (including the windup device 30) inside the window peripheral member 3 is hidden from the outside. The stay 40 and the stay 4 are preferably sized such that in the state in which the stay 40 is disposed in the slit 4, the stay 40 is slightly narrower than the width dimension of the slit 4 on the plate on which the opening edge of the slit 4 is located.

The stay 40 is configured to be locked with a part of the windup device 30 at the position at which it is disposed in the slit 4 for regulating the windup such that the shade 20 is not wound up further. For example, the windup device 30 may be provided with a stopper (not shown) for locking the stay 40. Needless to say, the stay 40 may be locked with a part of the window peripheral member 3 for regulating the windup of the shade 20.

The stay 40 is operated to move along the direction approximately orthogonal to the axial direction of the windup shaft 34 against the windup force of the windup device 30, which allows the shade 20 to be drawn through the slit 4. The shade 20 is drawn along the window 1. The direction in which the shade 20 is drawn/housed is referred to as a drawing/housing direction P. The state in which the shade 20 is drawn until the window 1 is entirely shielded is referred to as a drawn state of the shade 20 (see FIGS. 1 and 3).

As described above, in the shade device 10 including the shade 20 having the short side edge 22 and the long side edge 24, the slit 4 is formed to be longer than the long side edge 24 so as to pass through the long side edge 24 (portion located in the slit 4 in the drawn state of the shade 20). Meanwhile, the stay 40 is formed correspondingly to the short side edge 22 shorter than the long side edge 24 of the shade 20.

For this reason, a spot that is not covered by the stay 40 is generated at the position in the side (in this case, both sides) in the longitudinal direction of the stay 40 disposed in the slit 4 in the housed state of the shade 20. This keeps the slit 4 partially open for an amount longer than the stay 40 also in the housed state of the shade 20.

Therefore, the shade device 10 employs such a configuration as to entirely cover the slit 4 in the housed state of the shade 20.

Note that this problem arises from the shape of the shade 20 having the short side edge 22 and the long side edge 24 as described above, and is not directly related to the shape of the window 1. That is, while the shade 20 is normally formed into a shape corresponding to the shape of the window 1 (for example, into a trapezoidal shape when the window 1 has a trapezoidal shape), the shade 20 having the short side edge 22 and the long side edge 24 may be used also in a case of a window that does not have a short side and a long side. That is, the shade device 10 is also applicable to a window having a shape other than the above-mentioned shape having a short side and a long side.

Hereinafter, the configuration for entirely covering the slit 4 in the housed state of the shade 20 is described.

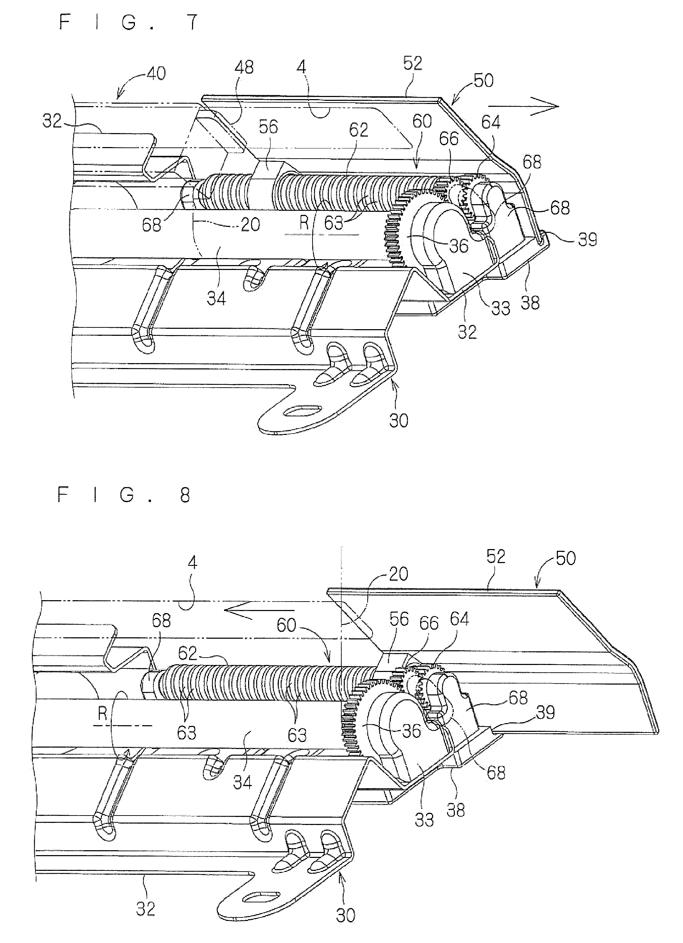

The cover body 50 is configured so as to move between a closed position at which the slit 4 is partially covered and an open position at which the slit 4 is opened (see FIGS. 7 and 8). More specifically, the closed position of the cover body 50 refers to a position at which the cover body 50 covers the side of the slit 4 in the longitudinal direction of the stay 40 in the housed state of the shade 20, whereas the open position refers to a position at which the cover body 50 retracts from the closed position so as not to interfere the side edge 26 of the shade 20 in the drawn state. That is, the open position of the cover body 50 is not limited to the state in which the slit 4 is not shielded at all.

In this case, the stay 40 and the cover bodies 50 cover the slit 4 in the housed state of the shade 20 (see FIG. 5). That is, the stay 40 is configured to cover the center portion of the slit 4 in the housed state of the shade 20, and thus, two cover bodies 50 are provided so as to respectively cover the open spots of the slit 4 on the both sides of the stay 40.

Needless to say, the cover body 50 is only required to cover the portion of the slit 4, which is open on the side in the longitudinal direction of the stay 40, in the housed state of the shade 20. That is, in a case where the stay 40 is disposed to be closer to one side in the longitudinal direction of the slit 4 (for example, in a case of the shade formed into a trapezoidal shape with one right angle) in the housed state of the shade 20, the cover body 50 may be provided only in the other side in the longitudinal direction of the stay 40. The number of association mechanisms 60 described below is also determined in accordance with the number of cover bodies 50.

The cover body 50 is a member in which a main body 52 and a guided part 56 are integrally formed from a resin material or the like.

The main body 52 is formed into a shape so as to cover the open spot on the side in the longitudinal direction of the stay 40 disposed in the slit 4 in the housed state of the shade 20. Here, the main body 52 is formed into a flat plate shape having a width dimension same as or larger (in this case, slightly larger) than the width dimension of the slit 4. It suffices that the main body 52 is formed to have a surface shape so as to extend along the vehicle inside portion of the window peripheral member 3 in the state in which the slit 4 is covered.

The guided part 56 is formed so as to be connected to the association mechanism 60 described below such that the main body 52 is moved between the open position and the closed position.

The association mechanism 60 is configured so as to move the cover body 50 between the open position and the closed position in an association manner with the pivot of the windup shaft 34. That is, the association mechanism 60 is capable of moving the cover body 50 along with the operation of drawing/housing the shade 20. The association mechanism 60 is configured to move the cover body 50 to the closed position for covering the slit 4 by the stay 40 and the cover body 50 in the housed state of the shade 20.

Here, the association mechanism 60 is configured so as to move the cover body 50 along the axial direction of the windup shaft 34.

Further, the two cover bodies 50 are provided as described above, and thus, the two association mechanisms 60 respectively operating the cover bodies 50 are provided. The description is given below focusing on the cover body 50 and the association mechanism 60 on one side (see FIGS. 4 and 6 to 9). Note that the other configuration is similar as well.

The association mechanism 60 includes a guide body 62 and transmission means.

The guide body 62 is a rod-like member configured so as to rotate about an axis, in which a helical guiding recess 63 is formed in the outer peripheral portion thereof (see FIGS. 7 and 8). In this case, the guide body 62 is a screw gear with the guiding recess 63 as a tooth groove.

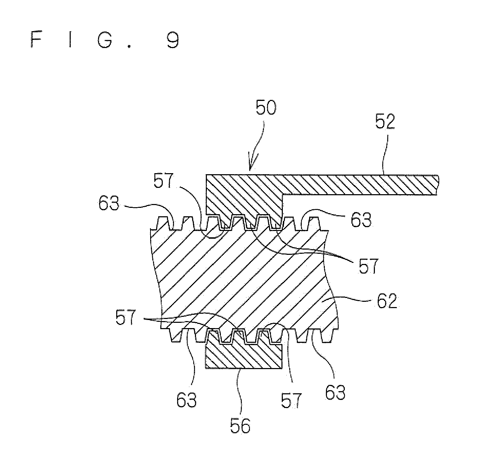

Meanwhile, the guided part 56 of the cover body 50 includes projections 57 movable in the guiding recess 63 of the guide body 62. More specifically, the guided part 56 is formed on the back surface of the main body 52 so as to protrude from one end in the moving direction of the cover body 50 and has a hole part passing therethrough in the moving direction. This hole part is formed such that the guide body 62 can be inserted thereinto (so as to have a diameter slightly larger than the outer diameter of the guide body 62). The projection 57 is formed so as to project inwardly in the radial direction of the hole part from the inner peripheral portion of the hole part. In this case, the guided part 56 has a form in which internal threads are formed in the hole part correspondingly to the guide body 62 being a screw gear, and the heads of the internal threads are the projections 57 (see FIG. 9).

Needless to say, the projection 57 of the guided part 56 is not limited to the head of the internal thread but may be, for example, a projection projecting from one spot of the hole part into a cylindrical shape or hemispherical shape. That is, it suffices that the projection 57 can be disposed in the guiding recess 63 of the guide body 62 and move inside thereof along (by being guided by) the guiding recess 63 in this disposed state.

In the state in which the guide body 62 is inserted into the guided part 56, the projections 57 of the guided part 56 are disposed in the guiding recess 63 of the guide body 62. When the guide body 62 is rotated relative to the guided part 56, the projections 57 move in the guiding recess 63, so that the cover body 50 is moved relative to the guide body 62 in the axial direction thereof.

The dimension in the axial direction of the portion of the guide body 62, in which the guiding recess 63 is formed, is set large enough to guide the cover body 50 between the open position and the closed position. That is, it suffices that this dimension is set to be equal to or larger (in this case, larger) than the dimension obtained by adding the moving distance of the cover body 50 between the open position and the closed position and the dimension of the guided part 56 in the moving direction of the cover body 50.

The guide body 62 is not limited to a screw gear but may be a rod-like member in which a helical cam groove is formed as a guiding recess. That is, there may also be adopted a form in which a helical cam groove (guiding recess) set to have torsion angles different from each other at respective portions is formed, and also in a case where the side edges of the shade 20 are, for example, curved, the cover body 50 can be moved along the side edges. In this case, for example, the above-mentioned cylindrical or semispherical shape may be employed as the shape of the projection of the guided portion 56.

The setting of the path of the guiding recess 63 of the guide body 62 is described below together with the description on the association operation between drawing/housing of the shade 20 and the movement of the cover body 50 for opening/closing.

The transmission means is configured so as to transmit the rotational force around the axis of the windup shaft 34 as the rotational force around an axis of the guide body 62. The transmission means includes a windup-shaft-side gear 36, an association gear 64, and an intermediate gear 66.

The windup-shaft-side gear 36 is coaxially connected to the windup shaft 34 so as not to rotate relative thereto. In this case, the windup-shaft-side gear 36 is integrally formed with the end of the windup shaft 34 and is supported by the pivot supporting part 33 so as to rotate around an axis together with the windup shaft 34.

The association gear 64 is coaxially connected to the guide body 62 so as not to rotate relative thereto. In this case, the guide body 62 and the association gear 64 are integrally formed.

The guide body 62, the association gear 64, and the intermediate gear 66 are supported by a gear holder 68 provided to stand on a support body 38 that constitutes the windup device 30. More specifically, the gear holder 68 supports the guide body 62, the association gear 64, and the intermediate gear 66 in such a manner that the association gear 64 meshes with the intermediate gear 66. In FIGS. 7 and 8, the portion of the gear holder 68, which supports the intermediate gear 66, is indicated by a chain double-dashed line.

Here, the intermediate gear 66 may be configured to be replaced with one having a different number of teeth correspondingly to the window 1 to which the shade device 10 is applied. For example, the intermediate gear 66 may employ such a configuration as to be replaced integrally with a portion of the gear 68 that supports it. That is, the portion indicated by a chain double-dashed line in FIGS. 7 and 8 may be configured to be attached to and detached from another portion of the gear holder 68 by fitting, screwing, or the like.

The support body 38 is configured so as to be attached to and detached from the base 32. More specifically, the support body 38 can be mounted to the base 32 at the position at which the intermediate gear 66 meshes with the windup-shaft-side gear 36. The support body 38 is preferably mounted such that the intermediate gear 66 meshes with the windup-shaft-side gear 36 also in a case where the intermediate gear 66 is replaced as described above. For example, it suffices that the support body 38 is allowed to be attached to and detached from the base 32 with the configuration so as be fixed through fitting, screwing, or the like.

The guide body 62 is supported by the gear holder 68 in such a position as to move the cover body 50 toward the closed position side when the windup shaft 34 pivots in windup direction R and move the cover body 50 toward the open position side when the windup shaft 34 pivots in the direction opposite to the windup direction R. That is, this position is such a position that the path of the guiding recess 63 is helical to turn in the windup direction R toward the outside in the longitudinal direction of the windup shaft 34.

Further, it suffices that in the state in which the support body 38 is mounted onto the base 32, the cover body 50 is connected to the guide body 62 in such a position that the end thereof on the side on which the guided part 56 is formed is located on the center side in the longitudinal direction of the windup shaft 34 (see FIGS. 7 and 8). This enables the guide body 62 to be disposed on the center side in the longitudinal direction of the windup shaft 34, and thus the association mechanism 60 can also be disposed on the center side in its entirety. Accordingly, the dimension in the longitudinal direction of the shade device 10 can be made compact.

The association mechanism 60 is configured so as to move the cover body 50 to be located at the closed position in the housed state of the shade 20 and move the cover body 50 to be located at the open position in the drawn state of the shade 20. More specifically, the association mechanism 60 is configured to gradually move the cover body 50 between the open position and the closed position along with the operation of drawing/housing the shade 20. It is preferable that the association mechanism 60 be set so as to move the cover body 50 along the side edges 26 of the shade to to be drawn/housed (in other words, with an approximately constant distance from the side edges 26 of the shade 20 that pass next to the sides of the cover body 50).

The association operation between the drawing/housing of the shade 20 and the opening/closing movement of the cover body 50 can be set in accordance with the path of the guiding recess 63 of the guide body 62 and the reduction ratio between the windup shaft 34 and the guide body 62 that is determined by the windup-shaft-side gear 36, the intermediate gear 66, and the association gear 64.

That is, the mode in which the cover body 50 moves between the open position and the closed position associated with drawing/housing (pivot of the windup shaft 34) of the shade 20 (ratio of the moving amount of each location to the entire moving amount) is determined by the angle of torsion of the path of the guiding recess 63. The path of the guiding recess 63 is determined based on the shape of the side edge 26 of the shade 20 (in other words, angles of inclination of each side edge 26 to the short side edge 22 and the long side edge 24).

The reduction ratio between the windup shaft 34 and the guide body 62 is determined based on the maximum drawing amount of the shade 20. In this case, it suffices that the reduction of ratio is changed by replacing the intermediate gear 66 with one having a different number of teeth. Needless to say, the reduction ratio may be changed by replacing the windup-shaft-side gear 36 and the association gear 66.

The configuration of the association mechanism 60 is not limited to the above-mentioned form. For example, the transmission means may be configured such that the windup-shaft-side gear 36 and the association gear 64 directly mesh with each other to be interlocked not by means of the intermediate gear 66. In this case, it suffices that the guide body 62 is supported by the gear holder 68 in such a position that the path of the guiding recess 63 is helical in the direction opposite to the above-mentioned direction.

The transmission means is only required to interlock the windup shaft 34 and the guide body 62 at the reduction ratio determined in accordance with the shape and size of the window 1 to which the shade device 10 is applied, and may adopt other various configurations. For example, the transmission means may be configured to interlock a pulley connected to the windup shaft 34 and a pulley connected to the guide body 62 via a belt.

Formed in the support body 38 is a cover body guiding part 39 that guides the cover body 50 in the moving direction (see FIGS. 7 and 8). In this case, the cover body guiding part 39 is formed into a groove shape so that one edge portion of the flat-plate like main body 52 along the moving direction can be disposed therein in the state in which the guide body 62 is inserted into the guided part 56. That is, the cover body guiding part 39 is formed so as to abut against the both sides in the thickness direction of the one edge portion (to become slightly larger in width than the thickness dimension of the one edge portion) such that the rotation of the cover body 50 around the axis of the guide body 62 is regulated.

Needless to say, the configuration for guiding the cover body 50 is not limited to the above-mentioned one. That is, a projected cover body guiding part may be formed in the support body 38, and a recessed portion in which the projected cover body guiding part can be formed may be formed in the main body 52.

It is possible to handle the support body 38, gear holder 68, guide body 62, association gear 64, intermediate gear 66, and cover 50 described above as integral parts that can be mounted to and demounted from the base 3 2.

Further, the stay 40 includes offset from the cover body 50 in the drawing/housing direction P of the shade 20 in the housed state of the shade 20 (indicated by a double-dashed line in FIGS. 6 and 7). More specifically, the stay 40 includes end members 42 at both ends thereof and is configured such that the auxiliary cover parts 48 each extend outwardly in the longitudinal direction from the end member 42.

The above-mentioned cover body 50 is provided so as not to interfere with the side edge 26 of the shade 20, and similarly, provided so as not to interfere with the stay 40 when the shade 20 is drawn/housed. Accordingly, a slight gap is generated between the end member 42 of the stay 40 and the cover body 50 in the housed state of the shade 20. That is, the auxiliary cover part 48 is provided for covering the gap between the end member 42 of the slit 4 and the cover boy 50 in the housed state of the shade 20.

In this case, the auxiliary cover part 48 extends from the end member 42 to such an extent that it overlaps the inner end portion of the cover body 50 located at the closed position in the drawing/housing direction P of the shade 20, in the housed state of the shade 20. This causes the slit 4 viewed from the vehicle interior to be covered between the stay 40 and the cover body 50 without any gap in the housed state of the shade 20. It suffices that the auxiliary cover part 48 is formed into a flat plate shape along the vehicle inside portion of the window peripheral member 3 in the housed state of the shade 20.

The operation of moving the cover body 50 associated with the operation of drawing/housing the shade 20 is described below.

First, the operation of drawing the shade 20 is described. As an initial state, the shade 20 is in the housed state (see FIGS. 2 and 5 to 7). That is, the slit 4 is covered with the stay 40 and the cover bodies 50 each located at the closed position.

First, the stay 40 located in the slit 4 is moved toward the drawing side in the drawing/housing direction P along the window 1.

When the stay 40 is moved and the shade 20 starts to be drawn, the windup-shaft-side gear 36 rotates in the direction opposite to the windup direction R, together with the windup shaft 34 around which the shade 20 is wound. Then, along with the rotation of the windup-shaft-side gear 36, the guide body 62 rotates in the direction opposite to the windup direction R together with the association gear 64 via the intermediate gear 66.

Then, the cover body 50 located at the closed position is gradually moved toward the open position side (outside in the longitudinal direction of the windup shaft 34) through the rotation of the guide body 62. More specifically, the position of the cover body 50 is regulated by the cover body guiding part 39 in the circumferential direction of the guide body 62, and the projections 57 move in the guiding recess 63 through the rotation of the guide body 62 while being located at the approximately constant positions in the circumferential direction of the guide body 62. Accordingly, the cover body 50 is moved in a constant position.

As the shade 20 is drawn further, the portion of the shade 20, which is located in the slit 4, gradually increases in width dimension. Then, the cover body 50 also moves gradually form the closed position side to the open position side so as to avoid the shade 20. That is, the shade 20 is drawn and the cover body 50 moves with the approximately constant distance between the side edge 26 of the shade 20 and the end on the inner side (center side in the longitudinal direction of the windup shaft 34) of the cover body 50.

When the shade 20 is drawn to the position (drawn state) for entirely shielding the window 1, the portion of the shade 20 that is located on the long side edge 24 side is located fully in the longitudinal direction of the slit 4, and the cover body 50 is located at the open position. That is, the slit 4 is open in its entirety.

Next, the operation of housing the shade 20 is described.

When the stay 40 is moved toward the housing side in the drawing/housing direction P, the shade 20 is wound up by the windup force of the windup device 30 to be housed therein. The windup-shaft- side gear 36 is rotated together with the windup shaft 34 rotated in the windup direction R associated with windup of the shade 20. Then, along with the rotation of the windup-shaft-side gear 36, the guide body 62 is rotated in the windup direction R around the axis thereof via the intermediate gear 66, together with the association gear 64.

Then, the cover body 50 located at the closed position gradually moves toward the closed position side (inside in the longitudinal direction of the windup shaft 34) through the rotation of the guide body 62.

The stay 40 is moved toward the housing side further, and then, the portion of the shade 20, which is located in the slit 4 in the longitudinal direction of the slit 4, decreases in dimension. Then, the cover body 50 also moves from the open position side to the closed position side. On this occasion, as in the case of drawing, the shade 20 is housed and the cover body 50 moves with the approximately constant distance between the side edge 26 of the shade 20 and the end on the inner side of the cover body 50.

When the stay 40 is moved to the position at which it is disposed in the slit 4 (the stay 40 is engaged with a part of the windup device 30), the shade 20 is housed, and the cover body 50 is located at the closed position. That is, the slit 4 is entirely covered with the stay 40 and the two cover bodies 50.

The shade device 10 may be configured such that the stay 40 is manually operated, which is configured here such that a drive mechanism part 90 causes the stay 40 to move by means of a pair of arms 80 for enabling the shade 20 to be automatically drawn/housed (see FIGS. 1 and 2).

Each of the pair of arms 80 includes a first member 82 and a second member 84.

One end of the first member 82 and the other end of the second member 84 are connected to each other so as to rotate relative thereto (second connecting part C2). A portion on the other end side of the first member 82 is connected to the end-side portion of the base 32 of the windup device 30 so as to rotate relative thereto (first connecting part C1). One end of the second member 84 is connected to the end member 42 of the stay 40 so as to rotate relative thereto (third connecting part C3). For example, the connecting parts C1 to C3 can each employ the configuration in which the connection targets are connected by inserting connecting axis members into the through-hole portions formed in the connection targets.

That is, the pair of arms 80 are configured so as to be folded (see FIG. 2) and be extended (see FIG. 1) at the positions of the second connecting parts C2, to thereby move the stay 40 along the drawing/housing direction P of the shade 20.

More specifically, the first member 82 is a flat-rod-shaped member that includes an extending-toward-frame part 83a extending toward the side of the window 1 from the first connecting part C1 and an extending-along-frame part 83b extending along the side of the window 1 in a manner of bending from one end of the extending-toward-frame part 83a. The second member 84 is an approximately linear flat-rod-shaped member.

That is, when the second connecting parts C2 move inwardly in the longitudinal direction of the windup device 30 and the pair of arms 80 are folded, the stay 40 moves from the short-length side of the window 1 toward the long-length side thereof, so that the shade 20 is housed. Then, the shade 20 is housed in the state in which the arms 80 are folded completely.

When the second connecting parts C2 move outwardly in the longitudinal direction of the windup device 30 and the pair of arms 80 are extended, the stay 40 moves from the long-length side of the window 1 toward the short-length side thereof, so that the shade 20 is drawn. Then, the shade 20 is drawn to cover the entire window 1 in the state in which the extending-along-frame part 83b of the first member 82 and the second member 84 are linear.

The drive mechanism part 90 is configured so as to rotatively drive the first members 82 of the arms 80 about the first connecting parts C1. In this case, the drive mechanism part 90 includes a motor 92 and predetermined links 94 each connected to the portion of the first member 82, which extends toward the other end side beyond the first connecting part C1. That is, the drive mechanism part 90 is configured to rotatively drive each of the first members 82 of the pair of arms 80 via the predetermined link 94 by the motor 92. Accordingly, the pair of arms 80 are extended and folded to move the stay 40 along the drawing/housing direction P of the shade 20, which enables to draw and house the shade 20.

It suffices that the drive mechanism part 90 is provided with an operation part (not shown) capable of operating driving of the motor 92 so as to drive drawing and housing through the operation of the operation part.

Needless to say, the shade device 10 is not limited to the above-mentioned configuration. For example, the shade device 10 may be configured such that a cover body is moved by a rack and pinion mechanism. That is, there may be employed a configuration in which a rack is provided in a cover body along a moving direction, and an association mechanism includes a pinion meshing with the rack, and a windup-shaft-side gear and an intermediate gear (for example, combination of bevel gears) provided for transmitting the rotational force around the axis of the windup shaft as the rotational force around the axis of the pinion.

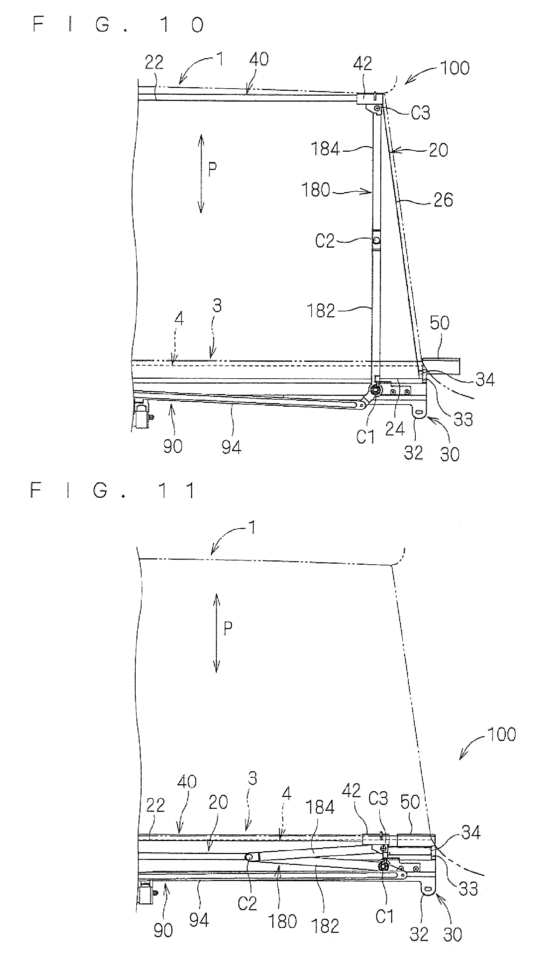

The shade device 10 is not limited to the configuration in which the first member 82 of the arm 80 includes the extending-toward-frame part 83a and the extending-along-frame part 83b. For example, as a shade device 110 shown in FIGS. 10 and 11, the configuration may be made such that arms 180 each have a structure in which approximately linear first member 182 and second member 184 are connected and the first member 182 and the second member 184 become approximately linear in its entirety in a state in which the arms 180 are extended. Note that the shade device 110 having the configuration shown in FIGS. 10 and 11 has a similar configuration to that of the shade device 10 described above except for the configuration of the arm 180.

Alternatively, the shade device 10 may include an association mechanism configured so as to move a cover body along the direction orthogonal to the axial direction of the windup shaft 34. That is, the shade device 10 includes a guide body capable of rotating about an axis along the width direction of the slit 4 and is configured to transmit the rotational force around the axis of the windup shaft 34 as the rotational force around the axis of the guide body via the transmission means. For example, the transmission means can employ the configuration including a windup-shaft-side gear, an association gear coaxially connected to the guide body so as not to rotate relative thereto, and a bevel gear meshing with the windup-shaft gear and the association gear.

In a case of employing the configuration in which the cover body is moved along the direction orthogonal to the axial direction of the windup shaft 34, it is preferable that before portions of the side edges 26 of the shade 20 come into contact with the inner ends of the cover bodies 50 at the closed position after the start of drawing of the shade 20, the cover body be retracted from the path of the shade 20 and, after the retraction, be maintained at the retracted position until the shade 20 is drawn entirely.

For example, a guide body can employ a cylindrical or columnar configuration in which a retraction guiding part including a guide surface circumferentially inclined in an outer peripheral portion thereof and a holding guide part including a guide surface circumferentially extending to be continuous from one end of the inclined portion are formed in the outer periphery. That is, in the state in which the cover body is located at the closed position, the projections of the cover body are located at the other end of the retraction guiding part, and when the shade 20 is drawn and the windup shaft 34 starts rotating, the projections are guided to the retraction guiding part and move to retract in the axial direction of the guide body. Then, the cover body retracts from the path of the shade 20 before the side edge 26 of the shade 20 comes into contact with the inner end of the cover body 50 at the closed position. After that, the projections of the cover body are guided by the holding guide part, and are maintained at the approximately constant open position in the axial direction of the guide body during the operation of drawing the shade 20.

With the configuration in which the cover body is moved along the direction orthogonal to the axial direction of the windup shaft 34 as described above, the windup device 30 can be installed fully in the width direction of the installation space.

According to the shade device 10 configured as described above, the configuration is made so as to cover the portions (portions that cannot be covered with the stay 40) of the slit 4, which are opened also in the housed state of the shade 20, with the cover bodies 50. The cover bodies 50 are moved between the open position and the closed position by the association mechanism 60 in an association manner with the pivot of the windup shaft 34, to thereby cover the slit 4 with the stay 40 and the cover bodies 50 moved to the closed position in the housed state of the shade 20. Accordingly, the slit 4 can be covered entirely in the housed state of the shade 20. The cover bodies 50 move to the open position in the drawn state of the shade 20, which also enables to prevent the cover bodies 50 from interfering with the shade 20.

The configuration is made such that the association mechanism 60 causes the cover bodies 50 to operate in an association manner with the pivot of the windup shaft 34, which enables to easily open/close the slit 4 merely through the operation of drawing/housing the shade 20.

The cover bodies 50 are provided on the windup device 30 side, and thus, the stay 40 itself can be made lighter in weight compared with the case in which the configuration for entirely covering the slit 4 is provided in the stay 40. This leads to an advantage that, for example, change of members, which is required for improving the strengths of the components such as the pair of arms 80, the connecting parts C1 to C3, and the base 32 of the windup device 30 supporting the pair of arms 80, can be eliminated. In addition, the cost associated with such change can be omitted as well. Further, the stay 40 is made lighter in weight, which also reduces the load imposed on the drive mechanism part 90.

Further, the configuration of the stay 40 can be simplified, which enables to prevent problems such as the shade 20 getting stuck in the drawing/housing operation.

The cover bodies 50 are configured to move along the axial direction of the windup shaft 34, which can also be applied to the case in which the space is difficult to be secured in the direction orthogonal to the axial direction of the windup shaft 34. There is no operation of causing the cover bodies 50 to protrude toward the vehicle inside, whereby it is possible to prevent the cover bodies 50 from overlapping each other toward the vehicle inside of the window 1 when the shade 20 is drawn.

The rotational force around the axis of the windup shaft 34 is transmitted by the transmission means, and the guide body 62 is rotated about the axis, whereby the projections 57 move in the guiding recess 63 of the guide body 62. As a result, the cover bodies 50 are moved in the axial direction relative to the guide body 62. Therefore, it is possible to move the cover bodies 50 to be opened and closed as desired in an association manner with the pivot of the windup shaft 34 associated with the operation of drawing/housing the shade 20 by setting the path of the guiding recess 63 in accordance with the shape, maximum drawing amount, and the like of the shade 20.

The windup-shaft-side gear 36 rotating together with the windup shaft 34 and the association gear 64 rotating together with the guide body 62 pivot via the intermediate gear 66, and thus, the setting of the moving amount and the like of the cover bodies 50 can be changed by changing the intermediate gear 66. This leads to an advantage of a high degree of flexibility in setting.

The guide body is a screw gear, and accordingly, the cover bodies 50 can be moved with a constant moving amount with respect to the rotation amount of the windup shaft 34. That is, in a case where the side edges 26 of the shade 20 are linear, the operation of drawing/housing the shade 20 can be performed stably while keeping the constant distance between the cover body 50 and the side edge 26 of the shade 20.

The cover body guiding part 39 is provided in the windup device 30, which enables to regulate the movement of the cover body 50 other than the movement in the axial direction of the guide body 62 (axial direction of the windup shaft 34) and the position change thereof. Accordingly, the operation of the cover body 50 can be stabilized.

The auxiliary cover parts 48 are provided to the stay 40, and thus, the slit 4 can be entirely covered with the stay 40 and the cover bodies 50 with more reliability.

While the shade device 10 has been described above in detail, the foregoing description is in all aspects illustrative, and the present invention is not limited thereto. That is, numerous modifications and variations can be devised in the described aspects without departing from the scope of the invention.

### Description of Reference Numerals

- 1: window
- 3: window peripheral member
- 4: slit
- 10: shade device
- 20: shade
- 22: short side edge
- 24: long side edge
- 30: windup device
- 34: windup shaft
- 36: windup-shaft-side gear
- 39: cover body guiding part
- 40: stay
- 48: auxiliary cover part
- 50: cover body
- 57: projection
- 60: association mechanism
- 62: guide body
- 63: guiding recess
- 64: association gear
- 66: intermediate gear

## Claims

1. A shade device configured to shield a window through a slit formed in a window peripheral member, comprising:
a windup device including a windup shaft supported so as to pivot about an axis;
a shade that includes a short side edge and a long side edge opposed to each other and is configured to be drawn from and housed in said windup device through said slit, said long side edge being attached to said windup shaft;
a stay attached to said short side edge of said shade;
a cover body movable between a closed position for partially covering said slit and an open position for opening said slit; and
an association mechanism that is configured so as to move said cover body between said open position and said closed position in an association manner with the pivot of said windup shaft, and moves said cover body to said closed position so as to cover said slit with said stay and said cover body in a housed state of said shade.

2. The shade device according to claim 1, wherein said association mechanism is configured so as to move said cover body along an axial direction of said windup shaft.

3. The shade device according to claim 1, wherein:
said association mechanism includes:
a guide body rotatable around an axis, in which a guiding recess is formed; and
transmission means transmitting a rotational force of said windup shaft as a rotational force around the axis of said guide body;
said cover body includes a projection configured to be disposed in said guiding recess of said guide body; and
said guiding recess is formed so as to guide said projection in the axial direction of said guide body by the rotation of said guide body in a state in which said projection of said cover body is disposed inside thereof.

4. The shade device according to claim 3, wherein said transmission means includes:
a windup-shaft-side gear coaxially connected to said windup shaft so as not to rotate relative thereto;
an intermediate gear configured to rotate by meshing with said windup-shaft-side gear; and
an association gear coaxially connected to said guide body so as not to rotate relative thereto and configured to rotate by meshing with said intermediate gear.

5. The shade device according to claim 3, wherein said guide body is a screw gear.

6. The shade device according to claim 1, wherein said windup device includes a cover body guiding part guiding said cover body along the axial direction of said windup shaft.

7. The shade device according to claim 1, wherein said stay includes an auxiliary cover part extending toward a side in a longitudinal direction, at a position offset from said cover body in a drawing/housing direction of said shade in the housed state of said shade.
